# FASCICULE DE BREVET EUROPEEN

(11) **EP 1 751 451 B1**
(45) Date de publication et mention de la délivrance du brevet: **09.07.2008**
(21) Numéro de dépôt: 05762554.3
(22) Date de dépôt: 13.05.2005
(51) Int. Cl.: F16H 61/32, F16D 27/00

(54) **PROCEDE ET DISPOSITIF DE COMMANDE D'UNE BOITE DE VITESSES**
VERFAHREN UND VORRICHTUNG FÜR GETRIEBESTEUERUNG
GEARBOX CONTROL METHOD AND DEVICE

(30) Priorité: 19.05.2004 FR 0450991
(43) Date de publication de la demande: 14.02.2007
(73) Titulaire: RENAULT S.A.S., 92100 Boulogne Billancourt (FR)
(72) Inventeur: RAOUL, Michel, F-78990 ELANCOURT (FR)
(74) Mandataire: Rougemont, Bernard
(86) Numéro de dépôt international: PCT/FR2005/050324
(87) Numéro de publication internationale: WO 2005/114009

(56) Documents cités:
- EP-A- 1 318 335
- WO-A-02/16807
- DE-C- 19 947 763
- FR-A- 2 839 131

## Description

La présente invention concerne une boîte de vitesses mécanique, notamment pour véhicule automobile, comportant au moins un actionneur de passage capable de fournir l'énergie mécanique et la force nécessaires aux passages des vitesses.

Plus précisément, cette invention a pour objet un dispositif et un procédé de commande d'une boîte de vitesses comportant un embrayage d'entrée commandé par une fourchette de débrayage, et au moins deux actionneurs de passage commandant chacun le passage de deux rapports de marche avant.

Elle trouve une application privilégiée, mais non limitative, sur une boîte de vitesses « robotisée », dans laquelle une partie des opérations de passage des vitesses est prise en charge par des systèmes d'actionnement électromécaniques, placés sous le contrôle d'un calculateur.

Par la publication EP 1318 335, on connaît un type de boîte de vitesses robotisée, équipée de dispositifs de couplage sur les rapports de deuxième à cinquième, comportant deux systèmes d'actionnement électromécanique. Le premier assure l'engagement, d'une part des rapports impairs de troisième et de cinquième, et d'autre part de l'embrayage. Le second assure l'engagement des rapports pairs, de deuxième et de quatrième.

L'inconvénient de cette disposition est qu'en cas de défaillance de l'actionneur dédié aux manoeuvres d'ouverture et de fermeture de l'embrayage, le véhicule est en situation de panne immobilisante, car la mise en déplacement du véhicule est impossible.

Pour remédier à cet inconvénient, l'invention propose une disposition de commande plus sûre, qui permet d'utiliser l'actionneur d'engagement des rapports de deuxième et de quatrième, pour les manoeuvres d'ouverture et de fermeture d'embrayage.

Dans ce but, elle propose de fixer sur l'axe de commande d'embrayage un crabot double, ou deux crabots simples, sollicités respectivement par un premier actionneur en mode normal et par un second actionneur en cas de défaillance du premier.

De préférence, le premier crabot ou une première partie du crabot double coopère avec un doigt de passage de l'actionneur des rapports de troisième et de cinquième, et le second crabot (ou la seconde partie du crabot double) coopère avec un doigt de passage de l'actionneur des rapports de deuxième et de quatrième.

Conformément à l'invention, le doigt de l'actionneur des rapports de deuxième et de quatrième peut avoir deux positions axiales, face au crabot d'un axe de fourchette de passage de vitesse, et face au crabot de l'axe de commande d'embrayage.

Selon un mode de réalisation particulier, l'axe de chaque actionneur, a deux positions, et passe de l'une à l'autre, sous l'action d'une force motrice électromécanique (par exemple un électro-aimant) dans un sens, et sous l'action d'un ressort de rappel dans l'autre sens.

Chaque actionneur peut posséder ses propres moyens de repérage de la position du doigt, par exemple de simples contacteurs.

Conformément à l'invention, un autre actionneur est donc utilisé pour les manoeuvres de l'embrayage en cas de défaillance de l'actionneur normalement dédié à celles-ci.

Selon une caractéristique de l'invention, l'actionneur dédié aux manoeuvres de l'embrayage en fonctionnement normal est aussi utilisé pour le passage de deux rapports de marche avant , de même que celui qui est utilisé en cas de défaillance de celui-ci.

D'autres caractéristiques et avantages de la présente invention apparaîtront clairement à la lecture de la description suivante qui suit, pour laquelle on se reportera aux dessins annexés dans lesquels :
- la figure 1 montre une vue de la commande, dans laquelle les doigts des actionneurs sont tous les deux placés en face des crabots d'actionnement des dispositifs de couplage internes à la boîte,
- la figure 2 montre une vue de la commande, dans laquelle le doigt de l'actionneur supérieur est face au crabot d'actionnement de l'embrayage, et le doigt de l'actionneur latéral est face au crabot d'actionnement de dispositifs de couplage internes à la boîte, et
- la figure 3 montre une vue de la commande, dans laquelle le doigt de l'actionneur latéral est face au crabot d'actionnement de l'embrayage, et le doigt de l'actionneur supérieur est face au crabot d'actionnement de dispositifs de couplage internes à la boîte.

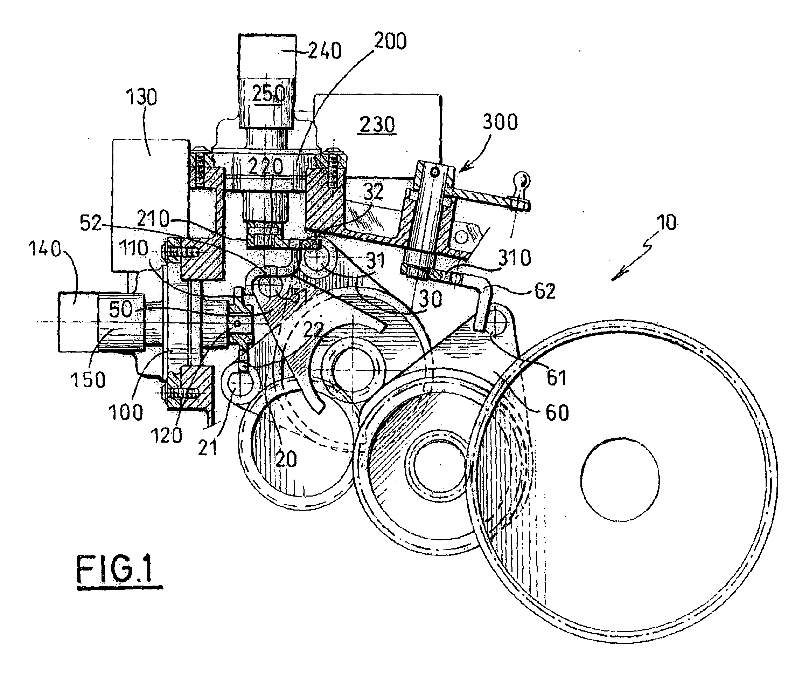

Sur la figure 1, on voit l'ensemble du dispositif de commande 10 pour une boîte de vitesses, comportant une première fourchette 20 de commande du baladeur des rapports de deuxième et de quatrième. La fourchette 20 est portée par un axe 21 comprenant un crabot 22 en liaison avec un premier dispositif de commande 100 par l'intermédiaire du doigt double 110 porté par l'axe 120. L'actionneur 100 commande donc la manoeuvre de deux rapports de marche avant en fonctionnement normal.

Le dispositif de commande comprend une deuxième fourchette 30 de commande du baladeur des rapports de troisième et de cinquième. La fourchette 30 est portée par un axe 31 comprenant un crabot 32 en liaison avec un deuxième dispositif de commande 200, par l'intermédiaire du doigt 210 porté par l'axe 220. L'actionneur 200 est donc aussi utilisé pour le passage de deux rapports de marche avant. Ainsi, le dispositif de commande proposé comporte un premier actionneur 200 de manoeuvre de l'embrayage et de deux rapports supérieurs de marche avant, et un deuxième actionneur 100 de passage de deux autres rapports supérieurs de marche avant et des manoeuvres de l'embrayage en cas de défaillance du premier.

Une troisième fourchette 50 commande l'embrayage d'entrée. Cette fourchette est portée par un troisième axe 51 comprenant un crabot d'actionnement d'embrayage double 52, sollicité par le premier actionneur 200 en mode normal, et par le second actionneur 100 en cas de défaillance du premier.

En variante, le dispositif peut comporter deux crabots d'actionnement d'embrayage simples, sollicités respectivement par le premier actionneur 200 en mode normal, et par le second actionneur 100 en cas de défaillance du premier.

Une quatrième fourchette 60 commande le baladeur des rapports de première et de marche arrière. Elle est portée par un axe 61 comprenant un crabot 62 en liaison avec un dispositif de commande manuelle 300, par l'intermédiaire du doigt 310. L'engagement du premier rapport de marche avant et de la marche arrière, sont assurés indépendamment des premier et deuxième actionneurs 200, 100, par des moyens de commande manuelle 300, de type mécanique.

L'ensemble du dispositif comprend donc deux systèmes de commande identiques 100 et 200 possédant deux positions.

Les actionneurs 100, 200 comprennent chacun une première source d'énergie, constituée d'un moteur électrique 130, 230 lié par un mécanisme de réduction respectivement aux doigts 110 et 210, et donnant un mouvement de rotation aux dits doigts, et d'une deuxième source d'énergie 140, 240 constituée par exemple d'un électroaimant incorporant un moyen de rappel mécanique (par exemple un ressort) et des moyens de mesure de position (par exemple des contacteurs électriques). Les électroaimants donnent aux doigts 110, 210 un mouvement de déplacement axial. Ainsi, chaque actionneur 200, 100 passe de l'une à l'autre de ses deux positions axiales sous l'action d'une force électromagnétique dans un sens, et sous l'action d'un ressort de rappel en, sens inverse.

Les actionneurs 100,200 comportent également des moyens de mesure 150,250 de position angulaire des doigts 110,210.

Conformément à l'invention, le dispositif de commande de la boîte de vitesses est donc doté de deux mécanismes d'actionnement de l'embrayage. Le fonctionnement de ce dispositif de commande est le suivant.

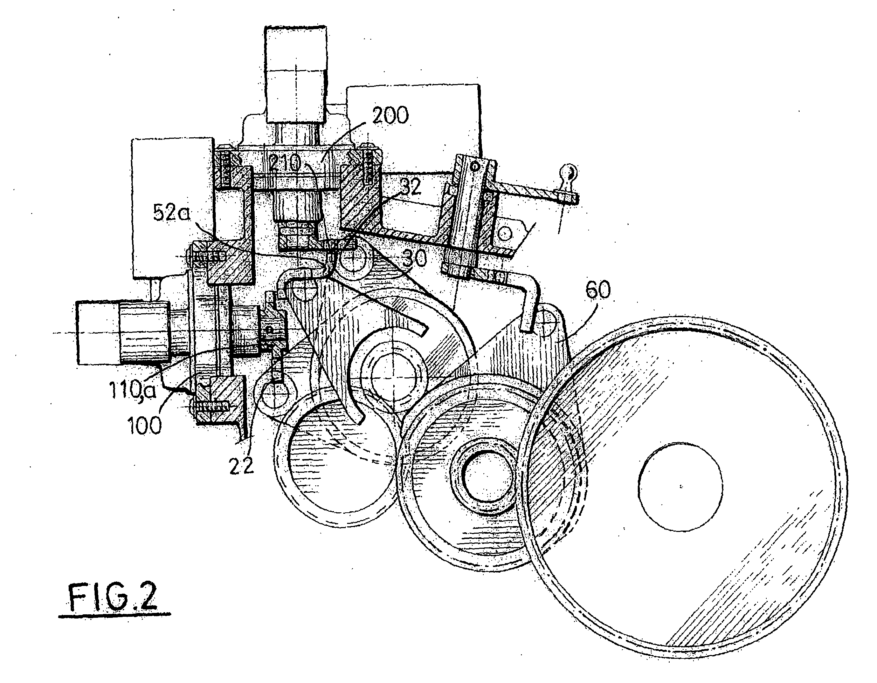

Lors du démarrage du véhicule, le doigt d'actionnement 210 de l'actionneur supérieur 200, se place en position basse, comme indiqué sur la figure 2. Il est face à la branche 52a du crabot d'actionnement de la fourchette de débrayage 50. Le système de gestion des passages de vitesses ouvre l'embrayage, et permet au conducteur d'enclencher le rapport de marche arrière ou le rapport de première (enclenchement interprété par le système de gestion des passages des vitesses comme étant la marche avant), en agissant directement sur la fourchette 60 par l'intermédiaire d'une commande à liaison mécanique. Simultanément, la branche 110a du doigt de commande 110 de l'actionneur latéral 100 est face au crabot 22 d'engagement des rapports de deuxième et de quatrième. Ainsi, le système est prêt à engager le rapport de deuxième au delà d'une certaine vitesse du véhicule sur le rapport de première, ce premier rapport de marche avant n'étant pas dégagé lors de l'engagement des rapports supérieurs.

Quand le véhicule atteint une certaine vitesse sur le rapport de deuxième, le doigt 210 de l'actionneur 200 passe en position haute, et se place face au crabot d'actionnement des rapports de troisième et de cinquième 32. Cela est le fonctionnement normal du système.

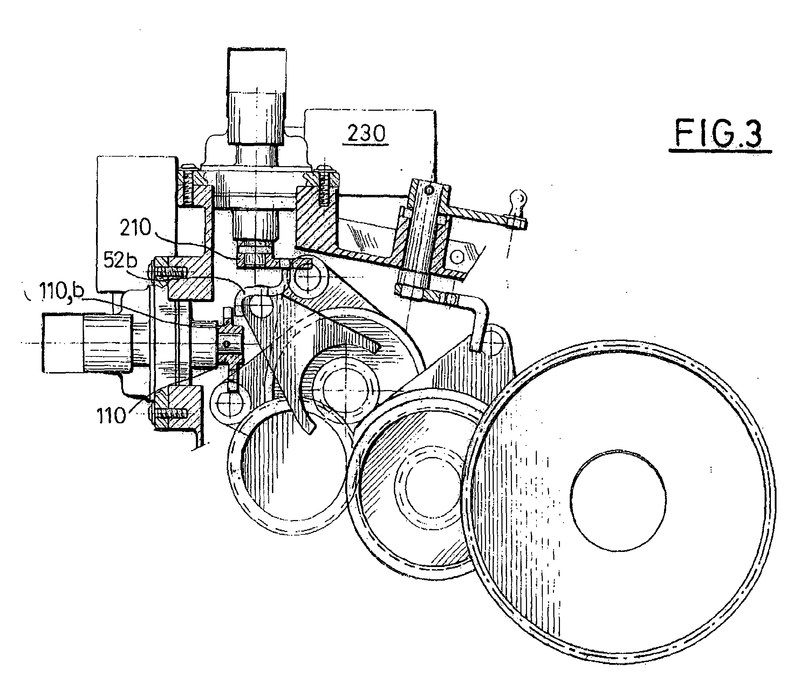

En cas de défaillance de l'actionneur supérieur - impossibilité de placer le doigt 210 en position basse ou défaillance de la source d'énergie 230 - le système réagit en déplaçant le doigt 110 de manière à ce que la branche 110b se place face à la branche 52b du crabot d'actionnement de l'embrayage comme indiqué sur la figure 3. Ainsi le système de gestion des passages de vitesses est en mesure d'ouvrir l'embrayage, et permet au conducteur d'enclencher le rapport de marche arrière ou le rapport de première. Le fonctionnement global est alors en mode dégradé et la boîte dispose seulement de ses rapports de première, de marche arrière, de deuxième, et de quatrième.

En cas de défaillance de l'actionneur latéral, les rapports de deuxième et de quatrième ne sont plus accessibles. Le système de gestion des passages de vitesses est en mesure d'ouvrir l'embrayage en faisant intervenir l'actionneur supérieur, et permet au conducteur d'enclencher le rapport de marche arrière ou le rapport de première. La boîte dispose alors de ses rapports de première, de marche arrière, de troisième, et de cinquième.

En conclusion, l'invention diminue, grâce à sa double commande d'embrayage, les risques d'immobilisation par impossibilité de mise en déplacement du véhicule, même en cas de défaillance de l'un de ses actionneurs de commande.

En effet, en cas de défaillance de l'actionneur des rapports de troisième et de cinquième, qui assurent normalement les manoeuvres de débrayage, le système de gestion des passages de la boîte fait appel à l'actionneur des rapports de deuxième et quatrième.

Dans cette situation particulière, de défaillance de l'actionneur d'embrayage habituel, la boîte dispose des rapports de première, marche arrière deuxième et quatrième. De plus, en cas de défaillance de l'actionneur des rapports de deuxième et quatrième, la boîte peut disposer des rapports de première, de marche arrière, de troisième, et de cinquième.

## Revendications

1. Procédé de commande d'une boîte de vitesses (10) comportant au moins deux actionneurs de passage (200, 100) dont un premier actionneur (200) dédié aux manoeuvres d'ouverture et de fermeture d'un d'embrayage d'entrée en fonctionnement normal, **caractérisé en ce qu'**un deuxième actionneur (100) est utilisé pour les manoeuvres de l'embrayage en cas de défaillance du premier.

2. Procédé de commande selon la revendication 1, **caractérisé en ce que** le premier actionneur (200) est aussi utilisé pour le passage de deux rapports de marche avant.

3. Procédé de commande selon la revendication 2, **caractérisé en ce que** le deuxième actionneur (100) commande la manoeuvre de deux autres rapports de marche avant en fonctionnement normal.

4. Procédé de commande selon la revendication 1, 2 ou 3, **caractérisé en ce que** l'engagement du premier rapport de marche avant et de la marche arrière, sont assurés indépendamment des premier et deuxième actionneurs (200, 100).

5. Procédé de commande selon l'une des revendications précédentes, **caractérisé en ce que** l'engagement du premier rapport de marche avant et de la marche arrière, sont assurés par des moyens de commande manuelle (300).

6. Procédé de commande selon l'une des revendications précédentes, **caractérisé en ce que** le premier rapport de marche avant n'est pas dégagé lors de l'engagement des rapports supérieurs.

7. Dispositif de commande de boîte de vitesses comportant un embrayage d'entrée commandé par une fourchette de débrayage (50)et au moins deux actionneurs de passage (200, 100) commandant chacun le passage de deux rapports de marche avant, **caractérisé en ce que** l'axe de commande de la fourchette de débrayage (50)peut être déplacé par l'un ou l'autre des deux actionneurs (200, 100).

8. Dispositif de commande selon la revendication 7, **caractérisé en ce qu'**il comporte un crabot d'actionnement d'embrayage double (52) sollicité par le premier actionneur (200) en mode normal et par le second actionneur (100) en cas de défaillance du premier.

9. Dispositif de commande selon l'une des revendications 1 à 7, **caractérisé en ce qu'**il comporte deux crabots d'actionnement d'embrayage, sollicités respectivement par le premier actionneur (200) en mode normal, et par le second actionneur (100) en cas de défaillance du premier.

10. Dispositif de commande selon la revendication , 8 ou 9, **caractérisé en ce que** les deux actionneurs (200, 100) possèdent chacun deux positions.

11. Dispositif de commande selon la revendication 10, **caractérisé en ce que** chaque actionneur (200, 100) passe de l'une à l'autre de ses deux positions sous l'action d'une force électromagnétique dans un sens, et sous l'action d'un ressort de rappel en sens inverse.

12. Dispositif de commande selon la revendication 7, **caractérisé en ce qu'**il comporte un premier actionneur (200) de manoeuvre de l'embrayage et de deux rapports supérieurs de marche avant, et un deuxième actionneur (100) de passage de deux autres rapports supérieurs de marche avant et des manoeuvres de l'embrayage en cas de défaillance du premier.

13. Dispositif de commande selon la revendication 12, **caractérisé en ce qu'**il comporte un troisième actionneur (300) de passage du premier rapport de marche avant et du rapport de marche arrière.

14. Dispositif de commande selon la revendication 13, **caractérisé en ce que** le troisième actionneur (300) est mécanique.

## Claims

1. Method of controlling a gearbox (10) comprising at least two shift actuators (200, 100) of which a first actuator (200) is dedicated to the opening and closing actuations of an input clutch in normal operation, **characterized in that** a second actuator (100) is used for the clutch actuations in the event of failure of the first.

2. Control method according to Claim 1, **characterized in that** the first actuator (200) is also used for shifting two forward gear ratios.

3. Control method according to Claim 2, **characterized in that** the second actuator (100) controls the actuation of two other forward gear ratios in normal operation.

4. Control method according to Claim 1, 2 or 3, **characterized in that** the first forward gear ratio and the reverse gear ratio are engaged independently of the first and second actuators (200, 100).

5. Control method according to one of the preceding claims, **characterized in that** the first forward gear ratio and the reverse gear ratio are engaged by manual control means (300).

6. Control method according to one of the preceding claims, **characterized in that** the first forward gear ratio is not disengaged during the engagement of the higher gear ratios.

7. Device for controlling a gearbox comprising an input clutch controlled by a clutch release fork (50) and at least two shift actuators (200, 100) each controlling the shifting of two forward gear ratios, **characterized in that** the control shaft of the clutch release fork (50) can be moved by one or other of the two actuators (200, 100).

8. Control device according to Claim 7, **characterized in that** it comprises a double clutch-actuating dog (52) subjected to the action of the first actuator (200) in normal mode and to the action of the second actuator (100) in the event of failure of the first.

9. Control device according to one of Claims 1 to 7, **characterized in that** it comprises two clutch-actuating dogs subjected respectively to the action of the first actuator (200) in normal mode and to the action of the second actuator (100) in the event of failure of the first.

10. Control device according to Claim 7, 8 or 9, **characterized in that** the two actuators (200, 100) each have two positions.

11. Control device according to Claim 10, **characterized in that** each actuator (200, 100) shifts from one of its two positions to the other under the action of an electromagnetic force in one direction and under the action of a return spring in the opposite direction.

12. Control device according to Claim 7, **characterized in that** it comprises a first actuator (200) for actuating the clutch and two higher forward gear ratios, and a second actuator (100) for shifting two other higher forward gear ratios and for actuating the clutch in the event of failure of the first.

13. Control device according to Claim 12, **characterized in that** it comprises a third actuator (300) for shifting the first forward gear ratio and the reverse gear ratio.

14. Control device according to Claim 13, **characterized in that** the third actuator (300) is mechanical.

## Patentansprüche

1. Verfahren zur Steuerung eines Schaltgetriebes (10), das mindestens zwei Schaltstellantriebe (200, 100) aufweist, darunter einen ersten Stellantrieb (200), der für die Öffnungs- und Schließbetätigungen einer Eingangskupplung im normalen Betrieb bestimmt ist, **dadurch gekennzeichnet, dass** ein zweiter Stellantrieb (100) für die Betätigungen der Kupplung im Fall des Ausfalls des ersten verwendet wird.

2. Steuerverfahren nach Anspruch 1, **dadurch gekennzeichnet, dass** der erste Stellantrieb (200) auch für das Schalten von zwei Vorwärtsgängen verwendet wird.

3. Steuerverfahren nach Anspruch 2, **dadurch gekennzeichnet, dass** der zweite Stellantrieb (100) die Betätigung von zwei anderen Vorwärtsgängen im Normalbetrieb steuert.

4. Steuerverfahren nach Anspruch 1, 2 oder 3, **dadurch gekennzeichnet, dass** das Einschalten des ersten Vorwärtsgangs und des Rückwärtsgangs unabhängig von dem ersten und dem zweiten Stellantrieb (200, 100) gewährleistet wird.

5. Steuerverfahren nach einem der vorhergehenden Ansprüche, **dadurch gekennzeichnet, dass** das Einschalten des ersten Vorwärtsgangs und des Rückwärtsgangs durch Einrichtungen mit manueller Steuerung (300) gewährleistet wird.

6. Steuerverfahren nach einem der vorhergehenden Ansprüche, **dadurch gekennzeichnet, dass** der erste Vorwärtsgang beim Einschalten der höheren Gänge nicht ausgekuppelt wird.

7. Steuervorrichtung eines Schaltgetriebes, das eine Eingangskupplung, die von einer Ausrückgabel (50) gesteuert wird, und mindestens zwei Schaltstellantriebe (200, 100) aufweist, die je das Einschalten von zwei Vorwärtsgängen steuern, **dadurch gekennzeichnet, dass** die Steuerachse der Ausrückgabel (50) bezüglich des einen oder anderen der zwei Stellantriebe (200, 100) verschoben werden kann.

8. Steuervorrichtung nach Anspruch 7, **dadurch gekennzeichnet, dass** sie eine Doppelkupplung-Betätigungsklaue (52) aufweist, die vom ersten Stellantrieb (200) im normalen Modus und vom zweiten Stellantrieb (100) im Fall des Ausfalls des ersten beaufschlagt wird.

9. Steuervorrichtung nach einem der Ansprüche 1 bis 7, **dadurch gekennzeichnet, dass** sie zwei Kupplungsbetätigungsklauen aufweist, die vom ersten Stellantrieb (200) in normalen Modus bzw. vom zweiten Stellantrieb (100) im Fall des Ausfalls des ersten beaufschlagt werden.

10. Steuervorrichtung nach Anspruch 8 oder 9, **dadurch gekennzeichnet, dass** die zwei Stellantriebe (200, 100) je zwei Stellungen besitzen.

11. Steuervorrichtung nach Anspruch 10, **dadurch gekennzeichnet, dass** jeder Stellantrieb (200, 100) unter der Wirkung einer elektromagnetischen Kraft in der einen Richtung und unter der Wirkung einer Rückholfeder in der Gegenrichtung von der einen seiner Stellungen zur anderen übergeht.

12. Steuervorrichtung nach Anspruch 7, **dadurch gekennzeichnet, dass** sie einen ersten Stellantrieb (200) zur Betätigung der Kupplung und von zwei höheren Vorwärtsgängen und einen zweiten Stellantrieb (100) für das Einschalten von zwei anderen höheren Vorwärtsgängen und für Betätigungen der Kupplung im Fall des Ausfalls des ersten aufweist.

13. Steuervorrichtung nach Anspruch 12, **dadurch gekennzeichnet, dass** sie einen dritten Stellantrieb (300) für das Einschalten des ersten Vorwärtsgangs und des Rückwärtsgangs aufweist.

14. Steuervorrichtung nach Anspruch 13, **dadurch gekennzeichnet, dass** der dritte Stellantrieb (300) mechanisch ist.
